# EUROPÄISCHE PATENTANMELDUNG

(11) **EP 4 169 840 A1**
(43) Veröffentlichungstag der Anmeldung: **26.04.2023**
(21) Anmeldenummer: 22201463.1
(22) Anmeldetag: 13.10.2022
(51) Int. Cl.: B65D 1/02

(54) **KUNSTSTOFFBEHÄLTNIS ZUR AUFNAHME VON GETRÄNKEN MIT VERBESSERTER STABILITÄT**

(30) Priorität: 19.10.2021 DE 102021127061
(71) Anmelder: Krones AG, 93073 Neutraubling (DE)
(72) Erfinder: Tissmer, Bastian, 93073 Neutraubling (DE); Hintermeier, Martin, 93073 Neutraubling (DE); Knapp, Peter, 93073 Neutraubling (DE)
(74) Vertreter: Bittner, Bernhard

(57) **Zusammenfassung**

Kunststoffbehältnis (1) mit einem Bodenabschnitt (102), mit einem sich an den Bodenabschnitt (102) in einer Längsrichtung (L) des Behältnisses anschließenden Grundkörper (106), der ein Innenvolumen des Kunststoffbehältnisses (1) ausbildet, innerhalb dessen die Flüssigkeit aufnehmbar ist und mit einem Mündungsabschnitt (108) mit einer Mündung, dadurch gekennzeichnet, dass der Bodenabschnitt (102) eine Vielzahl von Standfußbereichen (115) ausbildet, wobei zwischen zwei benachbarten Standfußbereichen (115) ein sich in einer radialen Richtung erstreckendes Zugband (150) angeordnet ist und der Bodenabschnitt (102) eine erste gewölbte Struktur (130) mit einem Anspritzpunkt (110) derart aufweist, dass der Anspritzpunkt (110) in der Längsrichtung (L) des Kunststoffbehältnisses (1) in Richtung der Mündung (108) des Kunststoffbehältnisses (1) ragt und sich an die erste gewölbte Struktur (130) in der radialen Richtung nach außen eine zweite gewölbte Struktur (140) anschließt, wobei diese zweite gewölbte Struktur in Richtung der Mündung (108) des Kunststoffbehältnisses (1) gewölbt ist, wobei ein Krümmungsradius der ersten gewölbten Struktur (130) wenigstens abschnittsweise geringer ist als ein Krümmungsradius der zweiten gewölbten Struktur (140).

## Beschreibung

Die vorliegende Erfindung bezieht sich auf ein Kunststoffbehältnis, insbesondere zur Aufnahme von Getränken. Derartige Behältnisse sind aus dem Stand der Technik seit längerer Zeit bekannt und lösen zunehmend Glasflaschen als Getränkebehältnisse ab. Der Vorteil dieser Kunststoffbehältnisse besteht insbesondere in dem geringeren Gewicht, der optimalen Handhabbarkeit bezüglich Design und teilweise in der mehrfachen Verwendbarkeit.

Aus dem Stand der Technik sind diverse Flaschen unterschiedlichster Größen sowohl für kleine Füllmengen im Bereich von 200 ml bis hin zu großen Füllmengen von 5 I bekannt. Diese Behältnisse weisen dabei die unterschiedlichsten Formen auf. Im Rahmen von Herstellungsverfahren werden Vorformlinge, beispielsweise mittels Luftdruck, zu den Kunststoffbehältnissen aufgeblasen bzw. expandiert. Zu diesem Zweck werden Vorformlinge üblicherweise in eine Form eingegeben und gegenüber dieser Form expandiert.

Zur Kosteneinsparung wird versucht, die Kunststoffbehältnisse mit immer weniger Materialaufwand und Energieaufwand (insbesondere Druckluft und Erwärmungsleistung) herzustellen. Dies bedeutet jedoch andererseits, dass an die Stabilität der Flaschen im Verhältnis zu der verwendeten Materialmenge zunehmend höhere Anforderungen zu stellen sind.

Insbesondere die Böden dieser Kunststoffbehältnisse sind besonders kritisch. Einerseits müssen diese Böden auch als Standflächen für die Behältnisse dienen und andererseits auch zum Teil höheren Innendrücken standhalten. Gleichzeitig sollen auch die Böden mit immer geringerem Materialaufwand hergestellt werden.

Produkte in der Lebensmittelindustrie werden zum Transport mit Stickstoff (N2) oder Kohlenstoffdioxid (CO2) im Behälter (z.B. PET Flasche) stabilisiert. Stickstoff und Kohlenstoffdioxid sind Zusatzstoffe in der Lebensmittelindustrie und dienen in erster Linie dem Schutz von Lebensmitteln. Die Gase verdrängen Sauerstoff und verhindern somit das schnelle Verderben von Lebensmitteln. Es sorgt zudem dafür, dass Lebensmitteln ihre Farbe und ihren Geruch beibehalten.

Hersteller wollen nicht immer einen Petaloidboden (5 Fußboden oder Mehrfußboden) unter ihren Flaschen haben, welcher einen Innendruck von bis zu 5,0bar aushalten kann. Die Flaschen sollen mehr wie eine Stillwasserflasche aussehen aber trotzdem einen Innendruck von bis zu 3,0 bar durch Stickstoff oder ein anderes Gas aushalten können.

Die vorliegende Erfindung bezieht sich insbesondere auf Behältnisse für sogenannte Stillwässer und druck - beaufschlagte Produkte. Bei diesen Produkten war die Ausprägung, insbesondere der Fußradien der Flaschenböden an den Rillen des Bodens nur mit einem hohen Fertigblasdruck von über 30 bar möglich. Dies bedeutet jedoch einen erhöhten Energieaufwand bei der Herstellung derartiger Behältnisse. Weiterhin weist ein derart hoher Fertigblasdruck von über 30 bar zur Ausformung der Fußradien der Rillen eines Bodendesigns auch keine Sicherheit für Druckstabilität ohne eine Abmusterung der Flasche in dem gefüllten Zustand auf.

Aus der DE 10 2013 101 332 A1 ist ein Kunststoffbehältnis bekannt. Dieses weist einen Bodenabschnitt mit einer domartigen Struktur auf, wobei auch ein Anspritzpunkt selbst in einer domartigen Unterstruktur ausgebildet ist.

Der Erfindung liegt daher die Aufgabe zugrunde, ein kostengünstiges Herstellen des Kunststoffbehältnisses zur Verfügung zu stellen, welches gleichwohl auch bestimmte Innendrücken standhält. Insbesondere soll dabei ein Kunststoffbehältnis zur Verfügung gestellt werden, welches auch mit geringeren Fertigblasdrücken erzeugt werden kann. Auch bei der Abfüllung von stillen Getränken, insbesondere ohne Kohlensäure, muss das Kunststoffbehältnis geringen Innendrücken standhalten, die beispielsweise durch erhöhte Außentemperaturen in der Umgebung des Kunststoffbehältnisses hervorgerufen werden können.

Diese Aufgabe wird erfindungsgemäß durch den Gegenstand von Anspruch 1 erreicht. Vorteilhafte Ausführungsformen und Weiterbildungen sind Gegenstand der Unteransprüche.

Ein erfindungsgemäßes Kunststoffbehältnis, insbesondere ein blasgeformtes Kunststoffbehältnis und insbesondere ein streckblasgeformtes Kunststoffbehältnis zur Aufnahme von Flüssigkeiten und insbesondere von Getränken weist einen Bodenabschnitt auf, der eine wenigstens teilweise umlaufende Standfläche ausbildet. Daneben weist das Kunststoffbehältnis einen sich an diesen Bodenabschnitt in einer Längsrichtung des Kunststoffbehältnisses anschließenden Grundkörper auf, der ein Innenvolumen des Kunststoffbehältnisses ausbildet (zur Aufnahme einer Flüssigkeit) und innerhalb dessen die Flüssigkeit aufnehmbar ist sowie einen Mündungsabschnitt mit einer Mündung, über welche in das Kunststoffbehältnis eine Flüssigkeit einfüllbar ist.

Erfindungsgemäß bildet der Bodenabschnitt eine Vielzahl von Standfußbereichen aus (bzw. weist diese auf), wobei (jeweils) zwischen zwei benachbarten Standfußbereichen eine sich in einer radialen Richtung (des Kunststoffbehältnisses) erstreckende Verstärkungsrippe und/oder ein sich in einer radialen Richtung erstreckendes Zugband angeordnet ist und der Bodenabschnitt (insbesondere in einem Zentralbereich) eine erste domartige Struktur mit einem Anspritzpunkt derart aufweist, dass der Anspritzpunkt in der Längsrichtung des Kunststoffbehältnisses in Richtung der Mündung des Kunststoffbehältnisses ragt und sich an die erste gewölbte (und/oder domartige) Struktur in der radialen Richtung (des Kunststoffbehältnisses) nach außen eine zweite gewölbte und/oder domartige Struktur anschließt, wobei diese zweite domartige Struktur in Richtung der Mündung des Kunststoffbehältnisses gewölbt ist und wobei ein Krümmungsradius der ersten domartigen Struktur wenigstens abschnittsweise und bevorzugt vollständig geringer ist als ein Krümmungsradius der zweiten domartigen Struktur und wobei wenigstens ein Zugband einen ersten Abschnitt und einen zweiten Abschnitt aufweist, die sich bevorzugt jeweils in der radialen Richtung erstrecken und die besonders bevorzugt voneinander beabstandet sind.

Bei einer weiteren (alternativen oder zusätzlichen) erfindungsgemäßen Ausgestaltung ist ein Gesamtgewicht des Bodenabschnitts größer ist als 2g, bevorzugt größer als 3g, bevorzugt 5g, bevorzugt größer als 7g und bevorzugt größer als 8g. Bei einer weiteren bevorzugten Ausführungsform ist ein Gesamtgewicht des Bodenabschnitts geringer als 30g, bevorzugt geringer als 25, bevorzugt geringer als 20g.

Bevorzugt verbreitert sich wenigstens ein Zugband wenigstens abschnittsweise in der radialen Richtung nach innen. Bevorzugt verbreitert sich der erste Abschnitt wenigstens eines Zugbandes, d.h. insbesondere der radial weiter innenliegende Abschnitt des Zugbandes in der radialen Richtung nach innen. Bei einer weiteren bevorzugten Ausführungsform handelt es sich hierbei um eine kontinuierliche Verbreiterung. (Die Breite des Zugbandes wird dabei insbesondere einer Umfangsrichtung des Bodenabschnitts betrachtet).

Besonders bevorzugt verbreitert sich der besagte erste bzw. innenliegende Abschnitt wenigstens eines Zugbandes und bevorzugt jedes Zugbandes um wenigstens 10%, bevorzugt um wenigstens 20%, bevorzugt um wenigstens 30%, bevorzugt um wenigstens 40% und besonders bevorzugt um wenigstens 50%.

Bei einer bevorzugten Ausführungsform ist in wenigstens einem Abschnitt des Zugbandes und insbesondere in einem radial innenliegenden Abschnitt des Zugbands dessen Breite größer als ein Abstand dieses Zugbandes zu einem benachbarten Zugband.

Bevorzugt ist in wenigstens einem Abschnitt des Zugbandes und insbesondere in einem radial innenliegenden Abschnitt des Zugbands dessen Breite nicht geringer als 90% des Abstandes dieses Zugbandes zu einem benachbarten Zugband, bevorzugt nicht geringer als 80% dieses Abstandes (wobei der Abstand der Zugbänder in einer Umfangsrichtung des Bodenabschnitts betrachtet wird).

Bei einer weiteren bevorzugten Ausführungsform verbreitert sich wenigstens ein Zugband in der radialen Richtung nach außen wenigstens abschnittsweise. Bevorzugt verbreitert sich wenigstens ein Abschnitt eines Zugbands in der radialen Richtung nach außen. Bevorzugt verbreitert sich wenigstens ein Abschnitt aller Zugbänder in der radialen Richtung nach außen. Bevorzugt verbreitert sich der Abschnitt des wenigstens eines Zugbandes um wenigstens 10 %, bevorzugt um wenigstens 20 %, bevorzugt um wenigstens 30 % und bevorzugt um wenigstens 40 %.

Bei einer weiteren bevorzugten Ausführungsform ist die oben erwähnte Standfläche in der Umfangsrichtung des Behältnisses wenigstens einfach und bevorzugt mehrfach unterbrochen. Bevorzugt ist die Standfläche in den Bereichen, in denen sich die Zugbänder befinden unterbrochen. Bevorzugt entspricht die Anzahl der Unterbrechungen des Standfläche der Anzahl der Standfußbereiche Bei einer bevorzugten Ausführungsform ist die Standfläche ringförmig ausgebildet.

Bevorzugt weist die Standfläche in der radialen Richtung des Behältnisses eine Breite auf, die größer ist als 0,5mm, bevorzugt größer als 0,8mm, bevorzugt größer als 1,0mm und besonders bevorzugt größer als 1,5mm und besonders bevorzugt größer als 2mm und besonders bevorzugt größer als 5mm. Bevorzugt weist die Standfläche in der radialen Richtung des Behältnisses eine Breite auf, die kleiner ist als 3cm, bevorzugt kleiner als 2,5cm, bevorzugt kleiner als 2cm und bevorzugt kleiner als 1,5cm

Bevorzugt reicht der Bodenabschnitt bis in den Grundkörper des Behältnisses bzw. er endet, wenn sich die Umfangsform bzw. Umfangswandung des Behältnisses im Wesentlichen in der Längsrichtung des Behältnisses erstreckt. Bevorzugt ist der Bodenabschnitt derjenige Bereich, der durch einen Blasformvorgang mittels eines Bodenteils einer Blasform erzeugt wird.

Bevorzugt wird zum Herstellen des Kunststoffbehältnisses eine mehrteilige und insbesondere dreiteilige Blasform verwendet, welche bevorzugt ein Bodenteil und zwei Seitenteile aufweist. Das Bodenteil dient dabei zur Ausformung des Bodenabschnitts des Kunststoffbehältnisses. Derjenige Teil des Kunststoffbehältnisses, der durch das Bodenteil erzeugt wird, weist bevorzugt das oben genannte Gewicht bzw. die oben genannte Masse auf.

Durch die hier beschriebene erhebliche Masse des Bodenabschnitts wird erreicht, dass dieser eine ausreichende Stabilität aufweist. Andererseits wird jedoch auch das Gewicht des Bodenabschnitts möglichst geringgehalten, um insgesamt das Gewicht des gesamten Behältnisses zu reduzieren.

Bevorzugt ist der Gewichtsanteil des Bodenabschnitts an dem Gesamtgewicht des Kunststoffbehältnisses größer als 10 %, bevorzugt größer als 15 %, bevorzugt größer als 20 %.

Besonders bevorzugt ist ein Gewichtsanteil des Bodenabschnitts an einem Gesamtgewicht des Kunststoffbehältnisses kleiner als 50 %, bevorzugt kleiner als 40 %, bevorzugt kleiner als 35 %.

Bevorzugt ist der Zentralbereich kreisförmig ausgebildet und/oder weist einen kreisförmigen Querschnitt auf. Dies gilt insbesondere, wenn auch die Gesamtstruktur des Behältnisses kreisförmig ausgebildet ist.

Bei einer weiteren vorteilhaften Ausführungsform steht eine Höhe der ersten domartigen bzw. gewölbten Struktur zu der Höhe des Bodenabschnitts in einem Verhältnis, welches zwischen 0,25, und 0,80 liegt. Bei einer weiteren vorteilhaften Ausführungsform steht die Höhe der zweiten domartigen und/oder gewölbten Struktur zu der Höhe des Bodenabschnitts in einem Verhältnis, welches unter 0,5 liegt.

Bei einer weiteren vorteilhaften Ausführungsform geht der Bodenabschnitt über einen Spline in den Grundkörper über, wobei bevorzugt ein Krümmungsverlauf dieses Splines durch ein Polynom n-ten Grades beschreibbar ist und dieser Grad bevorzugt zwischen 2 und 7 liegt.

Ein Spline n-ten Grades ist eine Funktion, die stückweise aus Polynomen höchstens n-ten Grades zusammengesetzt ist. Dabei werden an den Stellen, an denen zwei Polynomstücke zusammenstoßen, bestimmte Bedingungen gestellt, etwa dass der Spline-mal stetig differenzierbar ist.

Durch diese Ausgestaltung des Behältnisses ist es möglich, dass der Fertigblasdruck für die Behältnisse auf weniger als 20 bar reduziert werden kann. Bei diesem Fertigblasdruck lässt sich die hier beschriebene Bodengeometrie sehr gut ausformen. Weiterhin zeichnet sich das hier beschriebene Bodendesign durch eine Sicherheit für die Druckstabilität in gefülltem Zustand aus und ist in einem gefüllten Zustand auch nach Thermostabilitätstests von mehr als 38° über 24 Stunden druckstabil. Dabei kann dieses Behältnis Drücke im Bereich von wenigstens 0,5 bar standhalten. In bevorzugten, unten genauer beschriebenen Ausführungsformen, kann auch Drücken im Bereich von wenigstens 0,8 bar, bevorzugt von wenigstens 1,0bar, bevorzugt von wenigstens 2,0bar, bevorzugt von wenigstens 2,5bar standgehalten werden.

Vorteilhaft weist der besagte Zentralbereich einen kreisförmigen Querschnitt auf und ist, wie oben erwähnt, domartig oder kuppelartig ausgebildet. Auf diese Weise ragt der Anspritzpunkt des Behältnisses selbst in Richtung des Innenvolumens, was dazu führt, dass auch bei einer Druckbelastung der Anspritzpunkt nicht in der Längsrichtung des Behältnisses nach unten hervorsteht und dessen Standsicherheit behindert.

Vorteilhaft ist der Anspritzpunkt an einer Außenoberfläche des Kunststoffbehältnisses angeordnet. Bevorzugt ist der Anspritzpunkt innerhalb eines Bereiches angeordnet, der (bei aufrecht stehenden Kunststoffbehältnis) im Wesentlichen horizontal verläuft. Dieser Bereich kann dabei einen obersten Abschnitt der ersten gewölbten Struktur ausbilden.

Die zweite domartige bzw. gewölbte Struktur dient insbesondere auch zur Aufnahme von Drücken bzw. um diesen entgegenzuwirken. Bevorzugt weist ein Zentralbereich (welcher den Anspritzpunkt enthält) in seinem vollständigen Bereich einen größeren Krümmungsradius auf, als die zweite domartige Struktur. Dabei ist es möglich, dass diese Krümmungsradien konstant sind, es wäre jedoch auch denkbar, dass sich die Krümmungsradien in einem radialen Verlauf der Wandung ändern.

Bevorzugt gehen wenigstens zwei Abschnitte des Bodenabschnitts in jeweils einen weiteren Abschnitt des Bodenabschnitts tangentenstetig über. So ist es beispielsweise möglich, dass der Radius (bzw. der gekrümmte Abschnitt) des Zentralbereiches in den sich nach außen anschließenden ersten Radius (bzw. ersten gekrümmten Abschnitt) des Übergangsbereiches tangentenstetig übergeht.

Auch kann ein erster Radius (bzw. ein gekrümmter Abschnitt) des Übergangsbereiches in einen weiteren radial außen liegenden Bereich des Übergangsbereiches tangentenstetig übergehen. Weiterhin kann auch ein Radius des Krümmungsbereiches in einen Radius eines Fußes des Behältnisses tangentenstetig übergehen. Daneben ist es auch möglich, dass ein gekrümmter Abschnitt eines Fußbereiches des Behältnisses in einen Abschnitt der Wandung des Behältnisses tangentenstetig übergeht.

Bevorzugt verläuft die zweite domartige bzw. gewölbte Struktur gegenüber der Längsrichtung des Behältnisses unter einem Winkel, der größer ist als 20°, bevorzugt größer als 30°, bevorzugt größer als 40° und bevorzugt größer als 50°. Bei einer weiteren vorteilhaften Ausführungsform läuft die zweite domartige Struktur bzw. der domartige Abschnitt gegenüber der Längsrichtung des Behältnisses unter einem Winkel, der kleiner ist als 80°, bevorzugt kleiner als 70°. Diese Angaben sind dahingehend zu verstehen, dass eine Tangente und bevorzugt jeder Tangente, welche an die zweite domartige bzw. gewölbte Struktur angelegt wird (und sich auch in der radialen Richtung des Bodenabschnitts erstreckt), stets in den genannten Winkeln gegenüber der Längsrichtung verläuft.

Bevorzugt sind alle Standfußbereiche des Behältnisses gleichartig ausgebildet. Besonders bevorzugt weist der Bodenabschnitt wenigstens drei, bevorzugt wenigstens vier und besonders bevorzugt wenigstens fünf Standfußbereiche auf. Besonders bevorzugt weist der Bodenabschnitt weniger als 10, bevorzugt weniger als 9 und besonders bevorzugt weniger als 8 Standfußbereiche auf.

Besonders bevorzugt sind auch die Verstärkungsrippen bzw. Zugbänder des Bodenabschnitts jeweils gleichartig ausgebildet. Besonders bevorzugt ist auch nur eine Gattung an solchen Verstärkungsrippen vorgesehen und/oder alle Verstärkungsrippen bzw. Zugbänder weisen die gleiche Länge auf. Im Rahmen der vorliegenden Anmeldung werden die Begriffe Verstärkungsrippe und Zugband synonym verwendet.

Besonders bevorzugt weist der Bodenabschnitt lediglich die Standfußbereiche und die dazwischenliegenden Zugbänder auf. Besonders bevorzugt ist daher nur eine Gattung an Zugbändern vorgesehen. Diese können, wie unten genauer beschrieben, einteilig oder mehrteilig bzw. in einem durchgehenden Abschnitt oder in mehreren Abschnitten ausgebildet sein.

Besonders bevorzugt ist wenigstens ein Standfußbereich und sind bevorzugt mehrere Standfußbereiche und bevorzugt alle Standfußbereiche von dem Zentralbereich und/oder der ersten domartigen Struktur in der radialen Richtung des Bodenabschnitts beabstandet. Besonders bevorzugt ist dieser Abstand größer als 0,2 mm, bevorzugt größer als 0,4 mm. Bei einer weiteren vorteilhaften Ausführungsform ist dieser Abstand kleiner als 7 mm.

Bei einer weiteren bevorzugten Ausführungsform liegt ein Verhältnis zwischen einem Standkreisdurchmesser und einen Außendurchmesser des Behältnisses zwischen 0,615 und 0,835 und bevorzugt zwischen 0,63 und 0,77 und besonders bevorzugt zwischen 0,65 und 0,75.

Bei einer weiteren vorteilhaften Ausführungsform verläuft das Zugband und/oder die Verstärkungsrippe wenigstens abschnittsweise geradlinig (betrachtet in einer Projektion entlang der Längsrichtung des Kunststoffbehältnisses.

Bei einer weiteren vorteilhaften Ausführungsform ist das Zugband und/oder die Verstärkungsrippe zweiteilig ausgebildet. So ist es möglich, dass das Zugband und/oder die Verstärkungsrippe in der radialen Richtung unterbrochen ist. So kann das Zugband einen ersten radialen Abschnitt aufweisen, der sich in einer vorgegebenen radialen Richtung erstreckt sowie einen zweiten Abschnitt, der sich in der gleichen radialen Richtung erstreckt, wobei diese Abschnitte bevorzugt durch einen Steg oder dergleichen unterbrochen sind. Bevorzugt ist dabei der zweite Abschnitt des Zugbandes, der in der radialen Richtung des Bodenabschnitts weiter außen liegt als der erste Abschnitt, länger als dieser erste Abschnitt.

Es ist jedoch auch möglich, dass das Zugband und/oder die Verstärkungsrippe ihre Gestalt in radialer Richtung ändert. So kann beispielsweise abschnittsweise das Zugband eine erste Querschnittsgestalt aufweisen, und in einem weiteren radialen Abschnitt eine zweite Gestalt, welche von der ersten Gestalt abweicht.

Bei einer weiteren vorteilhaften Ausführungsform weist das Zugband und/oder die Verstärkungsrippe einen Querschnitt auf, die aus einer Gruppe von Querschnitten ausgewählt ist, welche trapezförmige Querschnitte, kreissegmentförmige Querschnitte, elliptische Querschnitte, dreieckförmige Querschnitte, rechteckförmige Querschnitte und dergleichen oder Mischgestalten aus diesen Querschnitten enthält. Dabei ist es möglich, dass der Querschnitt sich in einer radialen Richtung des Bodenabschnitts ändert. So ist beispielsweise möglich, dass sich das Zugband und/oder dessen Querschnitt in der radialen Richtung verbreitert. Bei einer weiteren vorteilhaften Ausführungsform sind alle Zugbänder des Bodenabschnitts gleichartig ausgebildet.

Bei einer weiteren bevorzugten Ausführungsform weist der Bodenabschnitt lediglich eine Gattung an Zugbändern aus und/oder alle Zugbänder sind in der gleichen Weise gestaltet. Bei einer weiteren bevorzugten Ausführungsform entspricht die Anzahl der Zugbänder (oder die Anzahl der sich aus zwei oder mehreren Abschnitten zusammensetzenden Zugbänder) der Anzahl der Standfußbereiche.

Bei einer weiteren vorteilhaften Ausführungsform weist der Bodenabschnitt wenigstens eine und bevorzugt eine Vielzahl von in der Umfangsrichtung des Bodenabschnitts umlaufenden Nuten auf. Bevorzugt ist dabei die Anzahl dieser Nuten an die Anzahl der Standfußbereiche angepasst und/oder entspricht dieser. Besonders bevorzugt sind diese Nuten in dem Bodenabschnitt oberhalb der Standfußbereiche angeordnet bzw. in einem Bereich, in dem der Bodenabschnitt in den Grundkörper übergeht. Daneben wäre es auch möglich, dass die Nuten in dem Bereich der oben erwähnten Zugbänder und/oder Stabilisierungsbereiche angeordnet sind.

Auch diese Nuten tragen zu einer Stabilisierung des Bodenabschnitts bei.

Die vorliegende Erfindung ist weiterhin auf ein Verfahren zum Herstellen eines Kunststoffbehältnisses der oben beschriebenen Art gerichtet. Dabei werden zunächst Kunststoffvorformlinge zur Verfügung gestellt. Weiterhin werden diese Kunststoffvorformlinge erwärmt und schließlich werden die Kunststoffvorformlinge innerhalb einer Blasform expandiert, wobei ein Bodenteil dieser Blasform derart gestaltet ist, dass es einen Bodenabschnitt eines Kunststoffbehältnisses nach wenigstens einem der vorangegangenen Ansprüche erzeugt.

Erfindungsgemäß werden die Kunststoffvorformlinge zu ihrer Expansion mit einem gasförmigen Medium mit wenigstens zwei unterschiedlichen Druckstufen beaufschlagt, wobei eine dieser Druckstufen ein Fertigblasdruck ist und dieser Fertigblasdruck unter 30 bar, bevorzugt unter 25 bar und besonders bevorzugt unter 20 bar liegt.

Durch diese gewählten Druckstufen kann, wie oben erwähnt, eine erhebliche Energieeinsparung bei der Umformung erreicht werden. Andererseits sind jedoch diese Druckstufen ausreichend, um den entsprechenden Bodenabschnitt zu erzeugen. Bevorzugt liegt eine zeitliche Dauer der Beaufschlagung mit dem Fertigblasdruck zwischen 0,9 Sekunden und 2,2 Sekunden, bevorzugt zwischen 0,9 Sekunden und 2,0 Sekunden und bevorzugt zwischen 0,9 Sekunden und 1,8 Sekunden.

Die vorliegende Erfindung ist weiterhin auf die Verwendung eines Kunststoffbehältnisses der oben beschriebenen Art zur Befüllung mit einem druckbeaufschlagten Getränk, gerichtet. Derartige Getränke verursachen bevorzugt innerhalb des Behältnisses in einem geschlossenen Zustand desselben einen Innendruck von bis zu 2,5bar, insbesondere von bis zu 3,0bar.

Bevorzugt ist das Kunststoffbehältnis aus PET gefertigt. Bei einer weiteren bevorzugten Ausführungsform weist das Kunststoffbehältnis ein Volumen auf, welches zwischen 200ml und 5,0l, bevorzugt zwischen 300ml und 4,01, bevorzugt zwischen 500ml und 3,0l liegt.

Die Erfindung ist weiterhin auf eine Blasform zum Herstellen eines Kunststoffbehältnisses der oben beschriebenen Art gerichtet. Dabei weist diese Blasform ein Bodenteil auf, welches zur Erzeugung eines Bodenabschnitts für das Kunststoffbehältnis der oben beschriebenen Art geeignet ist. Vorteilhaft weist die Blasform auch zwei Seitenteile auf, welche zur Erzeugung einer Umfangswandung des Kunststoffbehältnisses dienen.

Weitere Vorteile und Ausführungsformen ergeben sich aus den beigefügten Zeichnungen.

Darin zeigen:
- Fig. 1a-d: vier Darstellungen eines Kunststoffbehältnisses;
- Fig. 2: eine Darstellung eines erfindungsgemäßen Bodenabschnitts;
- Fig. 3: eine Darstellung eines alternativen Bodenabschnitts;
- Fig. 4: eine Darstellung eines Krümmungsverlaufs;
- Fig. 5: eine weitere Darstellung eines Krümmungsverlaufs;
- Fig. 6: eine perspektivische Ansicht des Bodenabschnitts;
- Fig. 7: eine Detaildarstellung des Bodenabschnitts;
- Fig. 8: eine Darstellung des Krümmungsverlaufs eines Zugbands;
- Fig. 8a: eine weitere Darstellung des Krümmungsverlaufs des Zugbandes;
- Fig. 9: eine weitere Teildarstellung eines Bodenabschnitts;
- Fig. 10: eine Darstellung des Bodenabschnitts;
- Fig. 11: eine perspektivische Darstellung eines Zugbandes
- Fig. 12: eine Schnittdarstellung eines Zugbandes bzw. einer Verstärkungsrippe;
- Fig. 13: eine Schnittdarstellung eines Zugbandes bzw. einer Verstärkungsrippe;
- Fig. 14: eine Darstellung eines Zugbandes bzw. einer Verstärkungsrippe;
- Fig. 15: eine Darstellung eines Zugbandes bzw. einer Verstärkungsrippe;
- Fig. 16: eine perspektivische Darstellung des Bodenabschnitts;
- Fig. 17: eine Detailansicht des Bodenabschnitts aus Fig. 16;
- Fig. 18a, b: zwei Seitenansichten eines Bodenabschnitts;
- Fig. 19: eine Schnittansicht des Bodenabschnitts;
- Fig. 20: eine detaillierte Seitenansicht des Bodenabschnitts;
- Fig.21a-d: vier Ansichten von Bodenabschnitten;
- Fig. 22a, b: zwei weitere Ansichten von Bodenabschnitten.

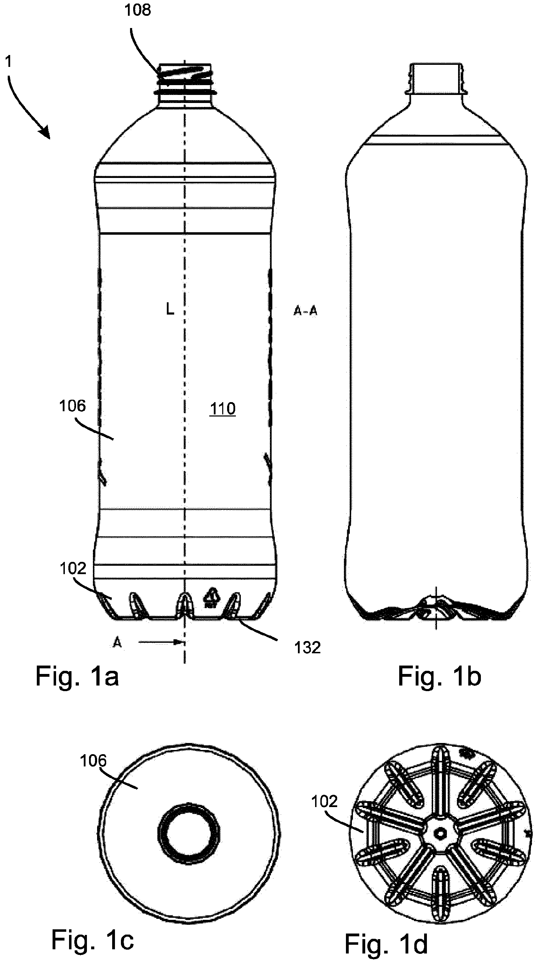

Die Fig. 1a - 1d zeigen vier Darstellungen eines Behältnisses 1 nach dem internen Stand der Technik der Anmelderin. Dieses Behältnis weist einen Bodenabschnitt 102 auf und einen sich der Längsrichtung L an diesen Bodenabschnitt 102 anschließenden Grundkörper 106, der einen wesentlichen Anteil des Innenvolumens 110 des Behältnisses 1 ausbildet.

Das Bezugszeichen 108 kennzeichnet eine Mündung bzw. einen Mündungsabschnitt des Kunststoffbehältnisses. Das Bezugszeichen 132 kennzeichnet einen Standbereich des Kunststoffbehältnisses. Dieser Standbereich kann dabei kreisförmig und insbesondere Kreisförmige mit Unterbrechungen ausgeführt sein.

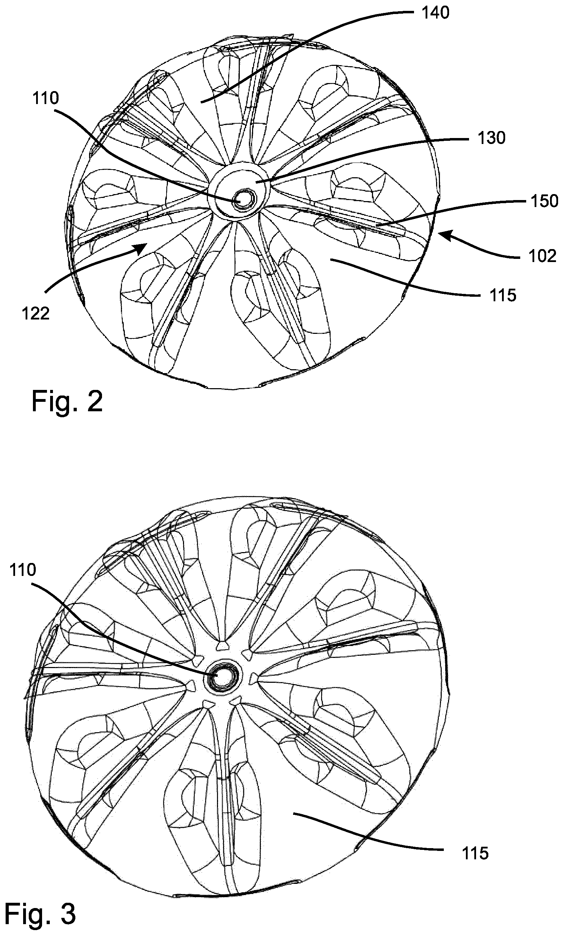

Fig. 2 zeigt eine perspektivische Darstellung einer erfindungsgemäßen Bodenabschnitts. Dieser weist einen Anspritzpunkt 110 auf, der in einer ersten gewölbten bzw. domartigen Struktur 130 angeordnet ist. Daneben sind mehrere Standfußbereiche 115 vorgesehen und zwischen diesen Standfußbereichen jeweils Zugbänder bzw. Verstärkungsrippen.

Das Bezugszeichen 140 bezieht sich auf eine zweite gewölbte bzw. domartige Struktur, die sich an die erste gewölbte Struktur 130 anschließt. Das Bezugszeichen 122 kennzeichnet einen Zentralbereich des Bodenabschnitts, der insbesondere die beiden gewölbten Strukturen 130 und 140 beinhaltet. Dieser Zentralbereich 122 ist insbesondere der innerhalb des Standfußkreises 132 (vgl. Fig. 1a) befindliche Bereich.

Bevorzugt ist die erste gewölbte Struktur 130 in der Umfangsrichtung des Bodenabschnitts 102 umlaufend und/oder ohne Unterbrechungen ausgebildet. Besonders bevorzugt ist die zweite gewölbte Struktur 140 in Umfangsrichtung nicht durchgängig bzw. unterbrochen ausgeführt. Genauer wird die zweite gewölbte Struktur in der Umfangsrichtung durch die Zugbänder 150 bzw. die Verstärkungsrippen 150 unterbrochen.

### Diese Zugbänder können insbesondere erhöhten radialen Belastungen und insbesondere Zugbelastungen standhalten

Der im Stand der Technik verwendete modifizierte Stillwasserboden erfüllt nicht alle Anforderungen:
Zwar wird der Thermostabilitätstest für 24h bei 38°C, eine positive Bodenfreiheit zu haben bei einem Innendruck über 0,5bar erfüllt. Allerdings wird ein Fertigblasdruck von unter 25,0 bar bei diesem Design noch nicht erreicht. Weitere Kriterien für derartige Kunststoffbehältnisse sind insbesondere Ausformbarkeit der Bodengeometrie ohne Weißbruch und das Bestehen eines Falltests.

Durch umfangreiche Versuche wurde die erfindungsgemäße Bodengeometrie gefunden. Diese ist eine Mischung aus dem was man allgemein als Stillwasserboden versteht und einem Petaloidboden bzw. NitroHotfill orange base design wobei in besonders vorteilhafter Weise die Vorteile beide Gestaltungen miteinander verbunden wurden und entsprechende Synergieeffekte ausgenutzt wurden.

Die Versuche haben gezeigt, dass ein Zugband bzw. eine Verstärkungsrippe, ein erhöhter Anspritzpunkt, eine bestimmte Anzahl von Füßen und ein bestimmtes Bodengewicht vorteilhaft die gewünschten Ergebnisse erzielen. Um die oben genannten Anforderungen zu erfüllen, ist es zusätzlich vorteilhaft, im Rahmen der Herstellung eine Bodennachkühlung zu verwenden, um das Ergebnis zu verbessern.

Die Anmelderin führte Versuche mit einer 1,85l Flasche, mit einem Durchmesser von 100mm und einer Bodenhöhe von 23,0mm und einer Standard - Bodenhöhe für Stillwasserböden mit diesem Durchmesser durch. Es wurden mehrere Preformgewichte, zwischen 28,0g und 38,0g, mit gleichem Mundstück verwendet.

Ein Teilergebnis dieser Versuche war, dass das Bodengewicht für diesen Durchmesser bzw. dieses Volumen nicht weniger als 7,0g im Durchschnitt haben sollte um einen Innendruck von 2,0bar zu halten (mit bestandenen Thermotest und Falltest). Dies gilt auch für die Innendrücke von 0,5bar bis 3,0bar.

Fig. 3 zeigt ein alternatives Bodendesign, wobei hier der Anspritzpunkt nicht in der in Fig. 2 gezeigten erhöhten Weise angeordnet ist. Ist das Bodenzentrum ohne den erhöhten Anspritzpunkt konstruiert, ähnlich einem Petaloidboden, wurde nur ein Innendruck von 1,0bar erreicht, mit bestanden Thermotest und Falltest. Das Bodengewicht war hier im Durchschnitt 10,0g.

Die Anmelderin hat ermittelt, dass ein bestimmtes Bodengewicht für andere Durchmesser bzw. Volumina notwendig ist, um den Innendruck zu erreichen bzw. zu halten. Mit anderen Worten wird das nötige Bodengewicht auch von Größen wie dem Volumen oder der Höhe des Behältnisses abhängen. Weiterhin besteht eine Abhängigkeit von einem Durchmesser der Böden und eine Abhängigkeit vom Preformgewicht sowohl brutto als auch netto.

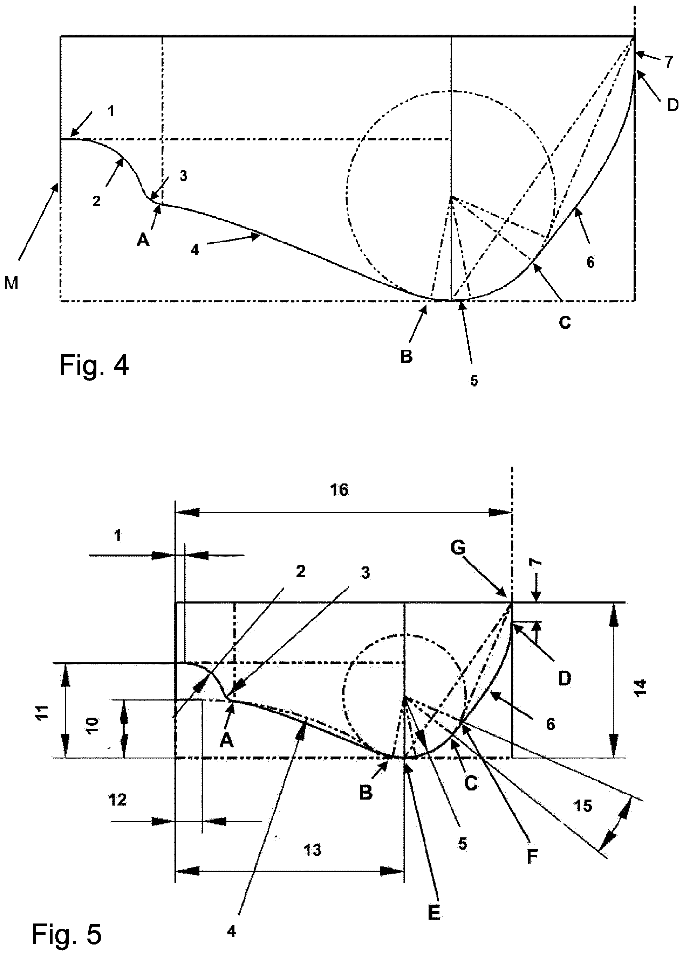

Fig. 4 zeigt einen Verlauf einer Basiskontur eines Bodenabschnitts 102 in dem Standfußbereich.

Die Basiskontur eines erfindungsgemäßen Bodenabschnitts wird bei der in Fig. 4 gezeigten Ausgestaltung beschrieben durch einen (insbesondere geradlinigen) Abschnitt 1, einen sich an diesen geradlinigen Abschnitt 1 anschließenden gekrümmten Abschnitt 2 (dieser bildet die oben erwähnte erste gewölbte Struktur 130 aus) sowie einen sich an diesen gekrümmten Abschnitt (bzw. Radius) 2 anschließenden (und insbesondere entgegengesetzt gekrümmten Abschnitt 3. Bevorzugt ist der Krümmungsradius in dem Abschnitt 2 dem Betrag nach größer als in dem gekrümmten Abschnitt 3. Der Anspritzpunkt (nicht gezeigt) ist in dem Bereich des geradlinigen Abschnitts 1 angeordnet.

An den gekrümmten Abschnitt 3 schließt sich ein durch einen Spline beschreibbarer (insbesondere gekrümmter) Abschnitt 4 an (der insbesondere die zweite gewölbte Struktur 140 ausbildet) und an diesen ein Fußradiusabschnitt 5 (der bevorzugt auch die Standfläche 132 ausbildet). An diesen Fußradiusabschnitt schließt sich ein weiterer durch einen Spline beschreibbarer Abschnitt 6 an und an diesen ein (bevorzugt geradliniger) Abschnitt 7.

Aus dieser Kontur wird die Außenfläche der Bodengeometrie durch eine Rotation um die Rotationsachse (Achse M) erzeugt.

Die Übergänge der einzelnen gekrümmten Abschnitte, des geradlinigen Abschnitts 1, des kleinen Domradius (bzw. des gekrümmten Abschnitts) 2, sowie des gekrümmten Abschnitts 3 sind bevorzugt wenigstens teilweise und sind besonderes bevorzugt alle tangentenstetig.

Der Übergang von dem gekrümmten Abschnitt 3 zu der Überbrückungskurve bzw. dem Abschnitt 4 in dem Punkt A und/oder der Übergang von dem Abschnitt 4 in den Fußradiusabschnitt 5 in dem Punkt B können bevorzugt krümmungsstetig, bevorzugt mindestens aber tangentenstetig sein.

Der Übergang vom Fußradiusabschnitt 5 in den Abschnitt 6 im Punkt C und/oder der Übergang von dem Abschnitt 6 in den geradlinigen Abschnitt 7 in dem Punkt D, sind bevorzugt krümmungsstetig, besonders bevorzugt jedenfalls tangentenstetig.

Die Überbrückungskurve bzw. der Abschnitt 4 kann in den Punkten A und B durch den Betrag des Tangentenvektors gesteuert werden. Der Tangentenvektor kann in A und B den sein, oder in A größer als B oder in A kleiner als in B. Die Werte des Tangentenvektors bewegen sich bevorzugt zwischen 0 und 2,0, bevorzugt zwischen 0,2 und 1,0, besonders bevorzugt zwischen 0,3 und 0,8.

Der Krümmungsverlauf der Abschnitte 4 und 6 kann bevorzugt durch ein Polynom n-ten Grades beschrieben werden. Der n-te Grad des Polynoms kann dabei besonders bevorzugt zwischen 2 und 7 liegen.

Fig. 5 zeigt eine weitere Darstellung eines Bodenabschnitts.

Die Außendimensionen des Bodenabschnitts werden durch den Außendurchmesser 16 und die Bodenhöhe 14 festgelegt.

Das Maß des Standkreisdurchmessers 13 wird bevorzugt durch ein Verhältnis zum Außendurchmesser 16 festgelegt. Das Verhältnis liegt bevorzugt zwischen 0,615 und 0,835, bevorzugt zwischen 0,63 und 0,80, und besonders bevorzugt zwischen 0,65 und 0,75.

Die Höhe 11 des kleinen Domradius bzw. des gekrümmten Abschnitts 2 wird bevorzugt durch ein Verhältnis zum Außendurchmesser 16 oder durch ein Verhältnis zur Bodenhöhe 14 beschrieben. Das Verhältnis zur Bodenhöhe bewegt sich bevorzugt zwischen 0,25 und 0,80.

Die Höhe 10 des Abschnitts 4 wird bevorzugt durch ein Verhältnis zum Außendurchmesser 16 beschrieben. Bevorzugt ist jedoch die Höhe Abschnitts 10 stets kleiner als die Hälfte der Bodenhöhe 14.

Der Anfangspunkt C Abschnitts 6 wird bevorzugt durch eine Gerade zwischen G und F erzeugt. Die Gerade FG ist besonders bevorzugt tangential am Fußradius. Der Anfangspunkt C des Abschnitts 5 kann bevorzugt mit Hilfe eines Winkels 15 auf dem Fußradiusabschnitt 5 zwischen den Punkten E und F bestimmt werden. Dieser Winkel 15 ist bevorzugt größer als 5° und/oder kleiner als 30°.

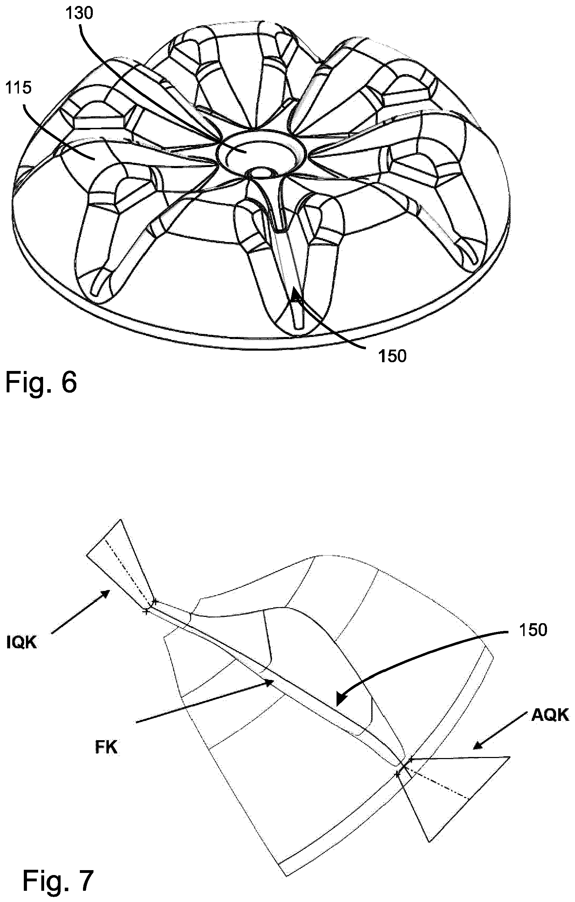

Fig. 6 zeigt eine Darstellung des Bodenabschnitts 102, der mit den oben beschriebenen Krümmungsverläufen erzeugt wird. Dieser Bodenabschnitt weist hier sieben Standfußbereiche 115 auf, welche jeweils durch die radial verlaufenden Zugbänder voneinander abgegrenzt sind. Man erkennt auch wieder die erste gewölbte Struktur 130 und den Anspritzpunkt 110. Es wird darauf hingewiesen, dass es sich bei dem Anspritzpunkt nicht um einen Punkt im geometrischen Sinne handelt, sondern genauer um einen Anspritzbereich, der beispielsweise ein kreisförmiges Profil aufweisen kann. Dieser Anspritzpunkt entsteht bei der Herstellung der Kunststoffvorformlinge in einem Spritzgießverfahren.

Fig. 7 zeigt eine Detaildarstellung des Bodenabschnitts im Bereich eines Zugbands 150. Die Geometrie des Zugbandes 150 wird bevorzugt durch eine innere Querschnittskontur IQK, eine Führungskontur FK und eine äußere Querschnittskontur AQK beschrieben. Bei einer bevorzugten Ausführungsform weist das Zugband zwei Abschnitte auf, die voneinander getrennt sind.

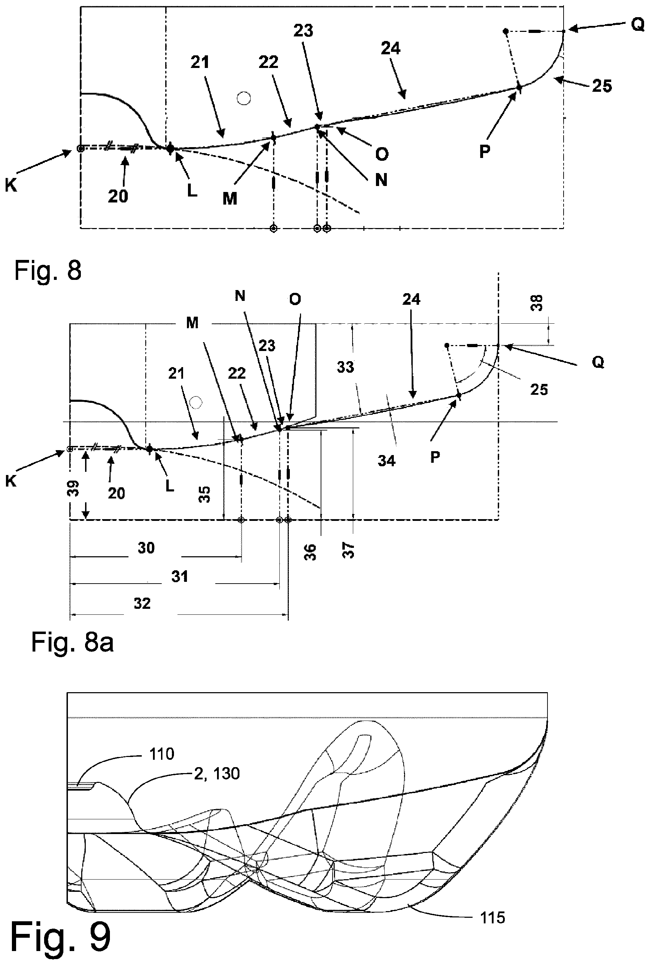

Fig. 8 und 8a zeigen den Krümmungsverlauf im Bereich eines Zugbandes.

Die Führungskontur des Zugbandes 150 wird durch einen geradlinigen Verlauf 20 beschrieben, an den sich gekrümmte Abschnitte 21 und 22 anschließen.

An den gekrümmten Abschnitt schließt sich der gekrümmte Abschnitt bzw. die Überbrückungskurve 23, die durch einen Spline beschreibbar ist an. An diesen gekrümmten Abschnitt 23 schließt sich eine Gerade oder eine Sehne 24 an und an diese wiederum und an diese wiederum der gekrümmte Abschnitt 25.

Der Punkt L bewegt sich auf dem gekrümmten Abschnitt 4 (Fig. 4) zwischen den Punkten A und B. Die Höhe 39 (Fig. 8a) der Geraden 20 (Fig. 8) hat bevorzugt einen vorgegebenen Abstand zur Höhe 10 (Fig. 4). Dieser Abstand steht bevorzugt in einem Verhältnis zur Bodenhöhe 14 (Fig. 5).

Die Übergänge der Radien bzw. Abschnitte 21, 22, 23, 24, 25 und des Abschnitts 20 (Fig. 8), sind bevorzugt wenigstens teilweise, besonders bevorzugt alle tangentenstetig. Der Übergang von dem Abschnitt bzw. Radius 25 in den Außendurchmesser 16 ist bevorzugt auch tangentenstetig.

Wird der Radius 23 durch einen Spline dargestellt, können die Übergänge wie folgt beschrieben werden:
Der Übergang von dem gekrümmten Abschnitt bzw. Radius 22 zu der Überbrückungskurve bzw. dem Abschnitt bzw. Spline 23 im Punkt N, und/oder der Übergang von dem Abschnitt 23, in den geraden oder gekrümmten Abschnitt bzw. die Gerade oder den Radius 24 im Punkt O, kann krümmungsstetig, mindestens aber tangentenstetig sein.

Der Abschnitt bzw. die Überbrückungskurve bzw. der Spline 23 kann in den Punkten N und O durch den Betrag des Tangentenvektors gesteuert werden. Der Tangentenvektor kann in N und O gleich sein, oder in N größer als in O oder in N kleiner als in O sein. Die Werte des Tangentenvektors bewegen sich zwischen 0 bis 2,0, bevorzugt zwischen 0,5 und 1,0.

Der Krümmungsverlauf der Splines 23 kann durch ein Polynom n-ten Grades beschrieben werden. Der n-te Grad des Polynoms liegt bevorzugt zwischen 2 und 7.

Fig. 8a zeigt eine weitere Darstellung des Krümmungsverlaufs.

Wenn der Abschnitt 24 als Gerade zwischen den Punkten O und P ausgeführt ist, kann diese über einen Winkel 33 beschrieben werden. Der Winkel kann sich zwischen 5° und 18° bewegen, bevorzugt zwischen 7° und 15°.

Die Abstandsmaße 30, 31, und 32 stehen bevorzugt in einem Verhältnis zum Außendurchmesser 16. Die Verhältnisse sind unterschiedlich und bewegen sich bevorzugt zwischen 0,10 bis 0,5.

Die Maße 35, 36, 37 und 38 stehen in einem Verhältnis zur Bodenhöhe 14.

Die Verhältnisse sind unterschiedlich, können auch gleich sein und bewegen sich zwischen 0,05 bis 0,7. Des Weiteren ist es vorstellbar, dass die Maße 35, 36, 37 und 38 in einem Verhältnis zum Maß 39 stehen anstelle zur Bodenhöhe.

Fig. 9 zeigt eine weitere perspektivische Detailansicht eines Bodenabschnitts. Dabei ist sowohl eine Verlaufskurve im Bereich eines Standfußes 115 als auch im Bereich eines Zugbandes 150 erkennbar.

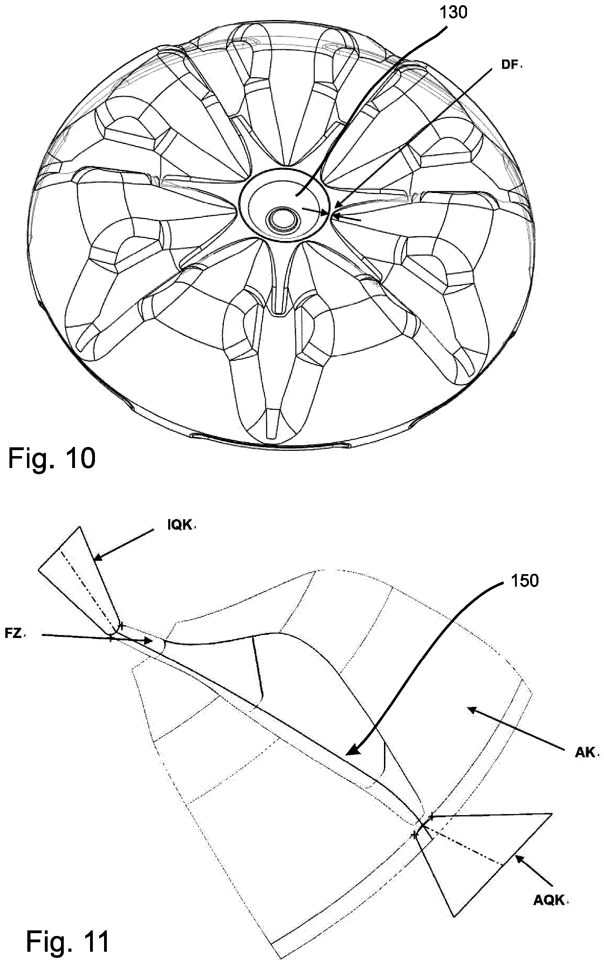

Fig. 10 zeigt eine weitere Darstellung des Bodennabschnitts 102. In dieser Darstellung ist insbesondere erkennbar, dass die Fußbereiche 115 einen gewissen (radialen) Abstand DF zu der ersten gewölbten Struktur 130 aufweisen.

Dieser Abstand DF zwischen der gewölbten Struktur und dem Dom 130 einerseits und dem Standfußbereich bzw. Fuß kann über das Maß 39 (Fig. 8a) eingestellt werden. Für diese Anwendung wäre ein kurzer bis kaum ein Abstand zu wählen, bevorzugt unter 0,5mm. Es ist aber denkbar, dass ein größerer Abstand von bis 7mm gewählt wird.

Fig. 11 zeigt eine weitere Darstellung eine Bodenabschnitts im Bereich eines Zugbandes. Es sind mehrere Varianten an Querschnittskonturen möglich, z.B. Trapez, Kreis, Ellipse, Dreieck, Rechteck usw.

Die Anzahl der Füße, die durch das Zugband oder die Zugbänder entstehen, sind bevorzugt gleichmäßig am Umfang des Bodenabschnitts 102 verteilt. Die Anzahl der Füße am Umfang kann sich zwischen 2 und 10 bewegen, bevorzugt zwischen 5 und 8, besonders bevorzugt zwischen 6 und 7.

Bevorzugt ist eine innere Querschnittskontur (IQK), die nahe dem kleinen Dom bzw. der ersten gewölbten Struktur an dem Führungskonturverlaufs des Zugbandes ist und eine äußere Querschnittskontur (AQK), die im Punkt Q (vgl. Fig. 8a) den Außendurchmesser schneidet.

Mit Hilfe der inneren Querschnittskontur IQK, die in dem Punkt K senkrecht zur Führungskontur steht, und der äußeren Querschnittskontur AQK, die in dem Punkt Q senkrecht zur Führungskontur steht, wird entlang der Führungskontur ein Flächenkörper Zugband (FZ) ausgebildet und bevorzugt von dem Volumenkörper der Außenkontur (AK) abgezogen (vgl. Fig. 11).

Die innere Querschnittskontur (IQK) und die äußere Querschnittskontur des Zugbandes können gleich groß sein, die gleichen Parameter haben, oder unterschiedlich groß sein und/oder unterschiedliche Parameter haben. Bei einer bevorzugten Ausführungsform gehen diese Konturen stetig ineinander in der radialen Richtung des Zugbandes über.

Bei einer bevorzugten Ausführungsform ändert sich daher eine Querschnittskontur des Führungsbandes in einer radialen Richtung des Bodenabschnitts. Bei einer bevorzugten Ausführungsform weist das Zugband oder weisen die Zugbänder in einem radial innenliegenden Bereich eine U-förmige Kontur oder eine V-förmige oder dreiecksförmige Kontur (bzw. einen solchen Querschnitt) auf und in einem äußeren Abschnitt eine trapezförmige Kontur.

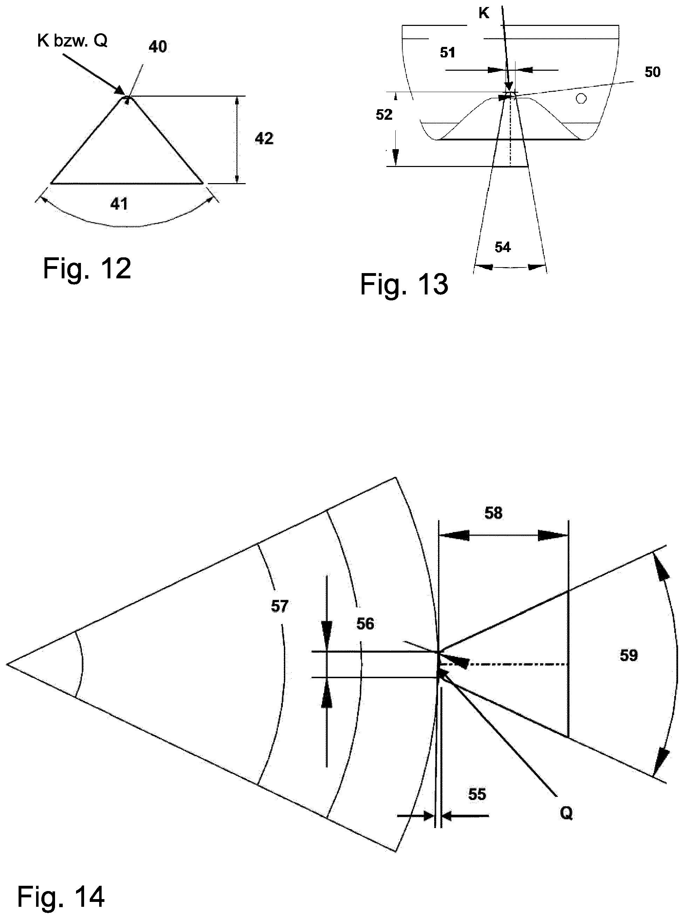

Die Fig. 12 und 13 zeigen mögliche Konturen der Zugbänder bzw. Querschnittskonturen.

So kann bevorzugt die radial innenliegende Kontur als Dreieckskontur mit gleichschenkligen Seiten ausgebildet sein.

Bevorzugt wird die Dreieckskontur mit den besonders bevorzugt glatten und gleichschenkligen Seiten über einen Radius 40, die Höhe 42 und den Öffnungswinkel 41 definiert. Der Öffnungswinkel liegt bevorzugt zwischen 5° und 150°, bevorzugt zwischen 10° und 120°

### Daneben kann die Kontur auch als gleichschenklige und/oder symmetrische Trapezkontur ausgebildet sein

Die innere Querschnittskontur IQK des Trapezes wird bevorzugt über den Radius 50, die kurze Trapezseite 51, die Höhe 52 und die Öffnungswinkel 54 definiert. Der Öffnungswinkel 54 kann zwischen 0° und 120°, bevorzugt zwischen 10° und 90° liegen.

Fig. 14 zeigt eine Darstellung der äußeren Querschnittskontur. Die äußere Querschnittskontur AQK des Trapezes wird bevorzugt über den Radius 56, die kurze Trapezseite 57, die Höhe 58 und die Öffnungswinkel 59 definiert. Der Öffnungswinkel 59 weist bevorzugt Werte zwischen 5° und 150°, bevorzugt zwischen 15° und 90° auf.

Die äußere Querschnittskontur AQK kann einen Abstand 55 von 0 bis 3,0mm im Punkt Q haben, bevorzugt senkrecht zur Führungskontur, um die Höhe des Auslaufs der Zugbandgeometrie am Umfang zu bestimmen.

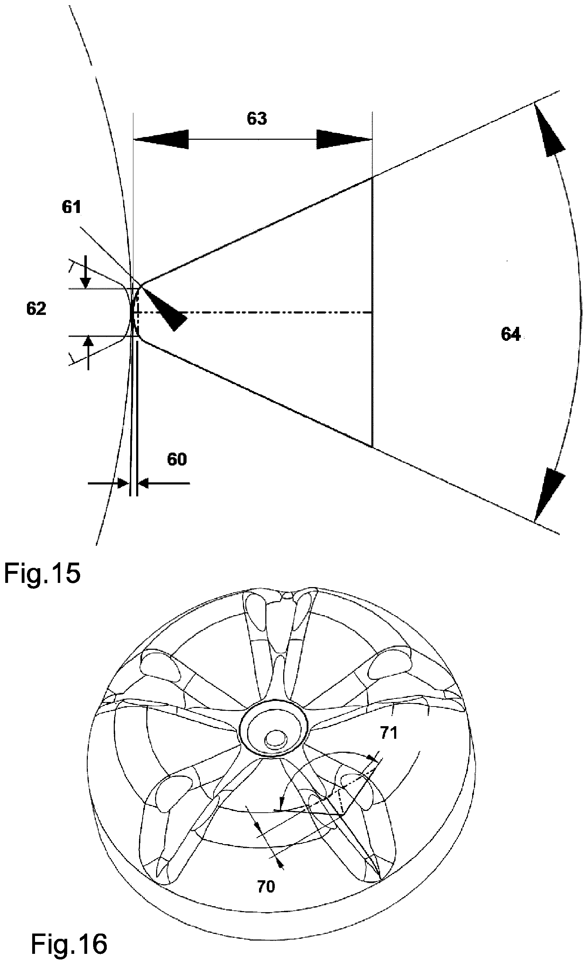

Fig. 15 zeigt eine Darstellung einer modifizierten Querschnittskontur.

Die innere und äußere Querschnittskontur des Trapezes könnte auch an Stelle der kurzen Trapezseite einen Kreisbogen (Radius) besitzen, welcher insbesondere als Sehne ausgeführt ist. Mit einem Maß 60, das die Krümmung der Sehne definiert. werden über den Radius 61 die kurze Trapezseite 62, die Höhe 63, und der Öffnungswinkel 64 definiert.

Der Öffnungswinkel weist bevorzugt Werte zwischen 5° und 150° besonders bevorzugt zwischen 15° und 90° auf.

Die äußere Querschnittskontur AQK kann einen Abstand von 0 bis 3,0mm im Punkt Q haben, insbesondere senkrecht zur Führungskontur, um die Höhe des Auslaufs der Zugbandgeometrie am Umfang zu bestimmen.

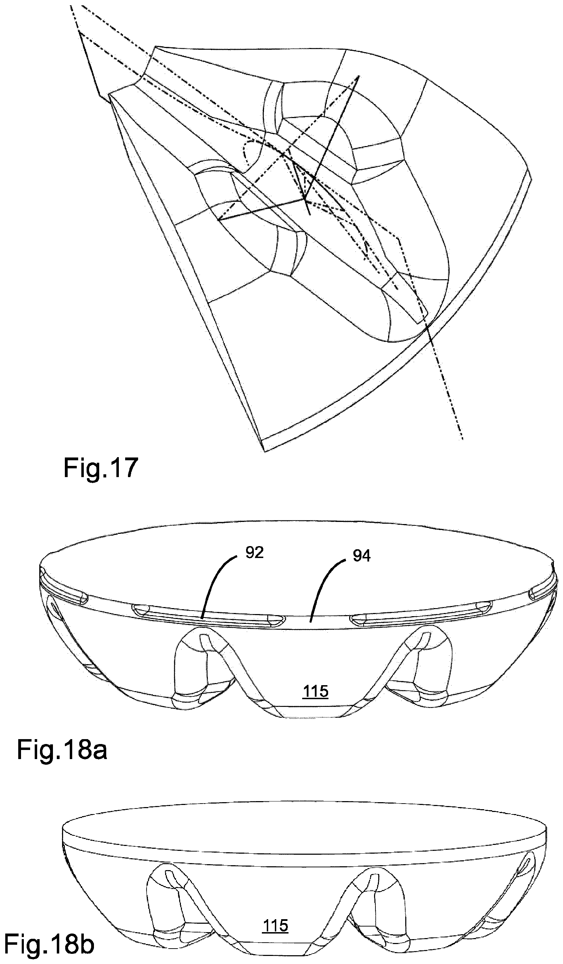

Die Fig. 16 und 17 zeigen zwei weitere Darstellungen des Bodenabschnitts in dem Bereich eines Zugbandes. In diesen Darstellungen ist zu erkennen, dass sich das gezeigte Zugband und insbesondere dessen zweiter Abschnitt radial nach außen verbreitert. Daneben ist zu erkennen, dass sich der erste Abschnitt des Zugbandes, d.h. der radial innenliegende Abschnitt in der radialen Richtung nach innen verbreitert.

Wie oben ausgeführt, kann sich das Zugband in der radialen Richtung des Bodenabschnitts nach außen erweitern bzw. verbreitern. Bevorzugt nimmt eine Querschnittsfläche des Zugbandes in der radialen Richtung von innen nach außen wenigstens abschnittsweise zu.

Diese Verbreitung des Zugbandes, beispielsweise auf Höhe des Standkreisdurchmessers kann vorgenommen werden, um die Blasbarkeit bzw. Ausformbarkeit zu verbessern und um so den Blasdruck weiter zu reduzieren.

Die Ausschnittskontur in Form eines Dreieckes bewegt sich bevorzugt auf der Linie von der Unterkante des Bodenabschnitts bis zur Oberkante des Bogenabschnitts. Der Beginn der Ausschnittskontur bzw. die Eintauchtiefe in den Bodenabschnitt wird bevorzugt über einen prozentualen Wert der Bodenhöhe gesteuert.

Die Größe der Ausschnittskontur wird bevorzugt über die Höhe des Dreiecks 70 und den Öffnungswinkel 71 gesteuert. Der Öffnungswinkel 71 kann Werte von 45° bis 150° annehmen, bevorzugt zwischen 60° und 120°.

Bei einer weiteren bevorzugten Ausführungsform ist das Zugband in radialer Richtung zweiteilig ausgebildet, wobei sich besonders bevorzugt die Konturen in diesen wenigstens zwei Abschnitten des Zugbandes unterscheiden.

Die Fig. 18a und 18b zeigen zwei Seitenansichten eines Bodenabschnitts.

Zur Stabilisierung der Mantelfläche des Bodenabschnitts unter Innendruck und zur Vermeidung von Ausbuchtungen (so genannten "Heiligenscheinen") über den Zugbändern kann eine insbesondere unterbrochene Rille 92 behilflich sein. Diese unterbrochene Rille befindet sich -bevorzugt mittig - über jedem Zugband (Fig. 18a). Die Anzahl stimmt bevorzugt mit der Anzahl der Füße bzw. Standfußbereiche überein. Diese unterbrochene Rille kann aber auch weggelassen werden (Fig. 18b).

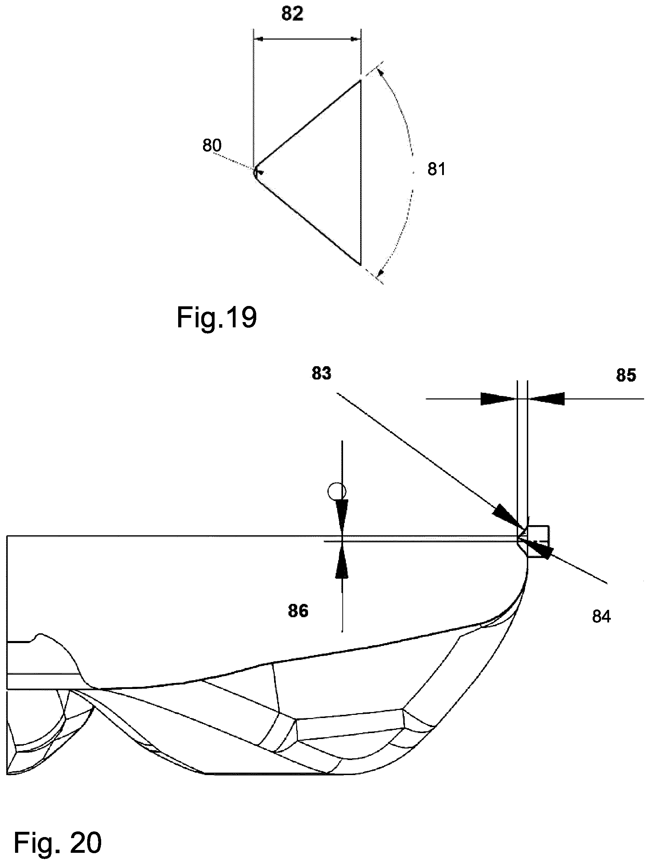

Fig. 19 zeigt eine Schnittdarstellung der unterbrochenen Rippe. Die Geometrie der unterbrochenen Rille kann jede beliebige Geometrie besitzen, z.B. Eine bevorzugte Geometrie eines Dreiecks bzw. eine geschwungene Geometrie. Das Dreieck aus Fig. 19 wird um 90° gedreht und anstelle einer geschwungenen Geometrie verwendet.

Die Dreieckskontur mit den glatten und gleichschenkligen Seiten wird bevorzugt über den Radius 80, die Höhe 82 und einen Öffnungswinkel 81 definiert. Der Öffnungswinkel liegt bevorzugt zwischen 5° und 150° und besonders bevorzugt zwischen 10° und 120°.

Wie ausgeführt, sind die Rillen 92 insbesondere unterbrochen. Bevorzugt weisen diese Rillen 92 in der Umfangsrichtung des Bodenabschnitts eine größere Länge auf als die zwischen diesen Rillen 92 liegenden Unterbrechungen 94. Besonders bevorzugt erstrecken sich die Rillen 92 senkrecht zu der Längsrichtung des Kunststoffbehältnisses.

Fig. 20 zeigt eine Schnittdarstellung zur Veranschaulichung der Rille 92. Eine Eintauchtiefe der Rillengeometrie wird bevorzugt über das Maß 85 (Fig. 20) gesteuert und die Höhe der Oberkante des Bodens mit dem Maß 86 (Fig. 20). Der Öffnungswinkel der unterbrochenen Rille ist abhängig von der Anzahl der Füße des Bodens am Umfang und beträgt bevorzugt zwischen 60° und 90°.

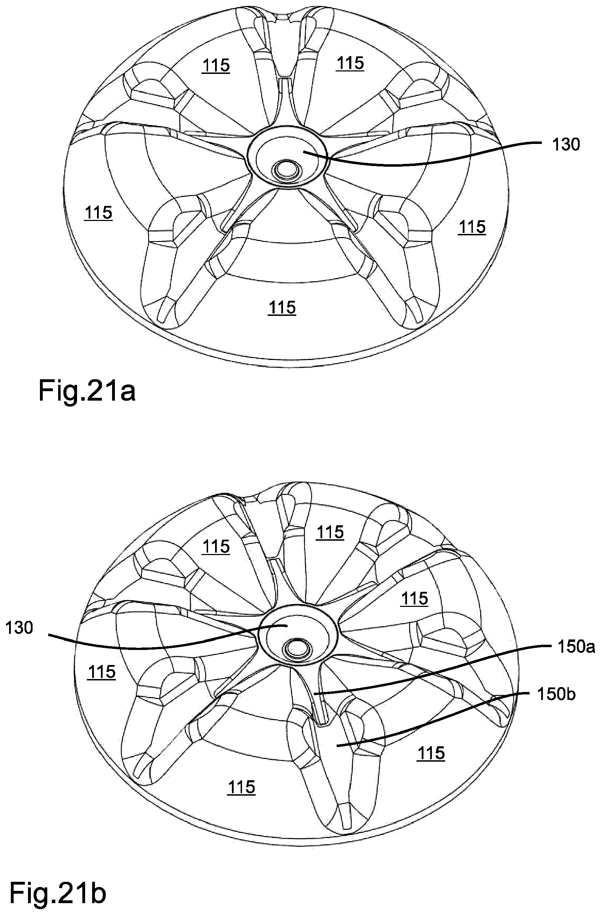

Die Figuren 21a - 21d zeigen vier Darstellungen von Bodenabschnitten 102 in unterschiedlichen Ausgestaltungen. Bei sämtlichen Ausgestaltungen ist jeweils der Zentralbereich mit dem Anspritzpunkt 110 vorgesehen, wobei jeweils die oben beschriebene erste gewölbte Struktur 130 und auch die zweite gewölbte Struktur vorgesehen ist.

Die in den Figuren 21a - 21d gezeigten Bodenabschnitte unterscheiden sich in der Anzahl der Standfußbereiche bzw. Standfüße.

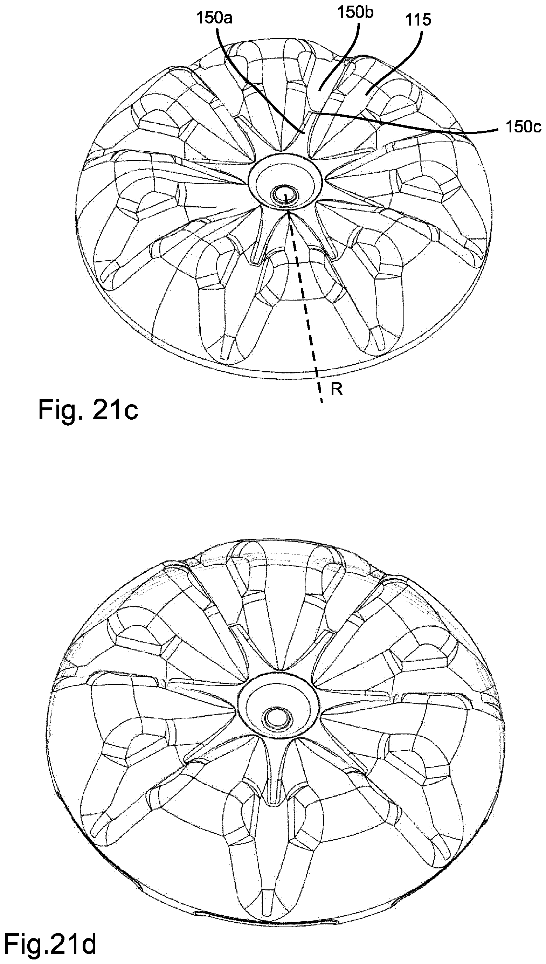

Bei der in Fig. 21a gezeigten Ausführungsform sind fünf Standfußbereiche vorgesehen, bei der i Fig. 21b gezeigten Ausführungsform sind sechs Standfußbereiche vorgesehen, bei der in Fig. 21c gezeigten Ausführungsform sind acht Standfußbereiche vorgesehen und bei der in Fig. 21d gezeigten Ausführungsform sind sieben Standfußbereiche vorgesehen.

Weiterhin sind bei der in Fig. 21d gezeigten Ausführungsform die oben beschriebenen Rillen 92 in der Umfangsrichtung des Bodenabschnitts vorgesehen. Es wird jedoch darauf hingewiesen, dass diese Rillen auch bei den in den Fig. 21a - 21c gezeigten Ausgestaltungen vorgesehen sein können.

Bei allen in den Fig. 21a - 21d gezeigten Ausgestaltungen sind die Zugbänder jeweils zweiteilig ausgebildet und weisen einen ersten sich in der radialen Richtung R erstreckenden Abschnitt 150a und einen zweiten sich in der radialen Richtung R erstreckenden Abschnitt auf.

Bevorzugt verjüngt sich der erste Abschnitt 150a in der radialen Richtung nach außen, besonders bevorzugt kontinuierlich. Bevorzugt verbreitert sich der zweite Abschnitt 150b des Zugbandes in der radialen Richtung R nach außen.

Bevorzugt sind der erste Abschnitt 150a und der zweite Abschnitt 150b durch einen in der Umfangsrichtung verlaufenden Steg 150c voneinander getrennt. Dieser Steg 150c weist dabei bevorzugt in der radialen Richtung eine Länge auf, die größer ist als 0,1mm, bevorzugt größer als 0,2mm und bevorzugt größer als 0,5mm. Bei einer weitere bevorzugten Ausführungsform weist dieser Steg 150c in der radialen Richtung eine Länge auf, die geringer ist als 3mm, bevorzugt geringer als 2mm, bevorzugt geringer als 1mm.

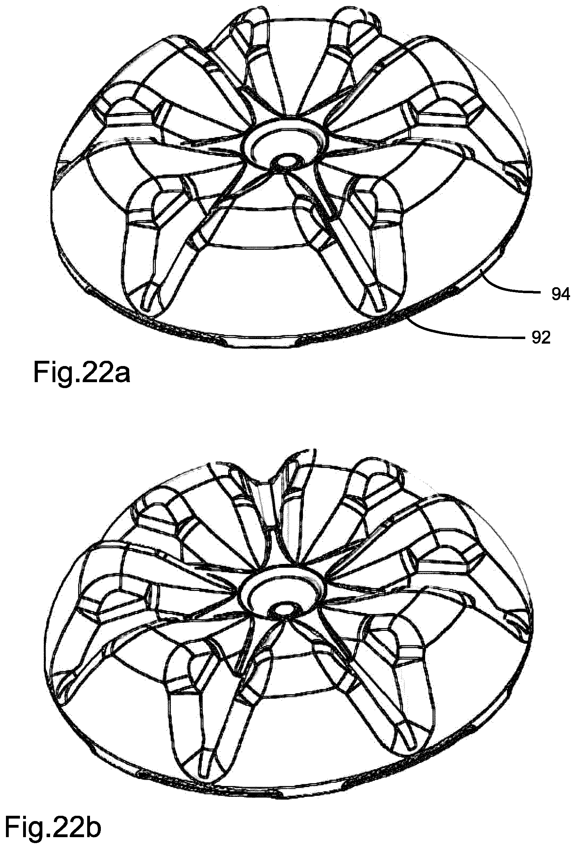

Die Fig. 22a und 22b zeigen zwei weitere Darstellungen von Bodenabschnitten. Auch diese weisen jeweils die Rillen 92 sowie die zwischen diesen Rillen liegenden Abschnitte 94 auf. Auch bei diesen Ausgestaltungen sind die Zugbänder jeweils zweiteilig ausgebildet.

Der in Fig. 22a gezeigte Bodenabschnitt weist sechs Standfußbereiche auf und der in Fig. 22b gezeigte Bodenabschnitt weist sieben Standfußbereiche auf.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Kunststoffbehältnis (1) zur Aufnahme von Flüssigkeiten und insbesondere von Getränken mit einem Bodenabschnitt (102), der eine wenigstens teilweise umlaufende Standfläche (132) ausbildet, mit einem sich an den Bodenabschnitt (102) in einer Längsrichtung (L) des Behältnisses anschließenden Grundkörper (106), der ein Innenvolumen (110) des Kunststoffbehältnisses (1) ausbildet, innerhalb dessen die Flüssigkeit aufnehmbar ist und mit einem Mündungsabschnitt (108) mit einer Mündung, über welche in das Kunststoffbehältnis (1) eine Flüssigkeit einfüllbar ist,
**dadurch gekennzeichnet, dass**
der Bodenabschnitt (2) eine Vielzahl von Standfußbereichen (115) aufweist, wobei zwischen zwei benachbarten Standfußbereichen (115) ein sich in einer radialen Richtung (R) erstreckendes Zugband (150) angeordnet ist und der Bodenabschnitt (102) eine erste gewölbte Struktur (130) mit einem Anspritzpunkt (110) derart aufweist, dass der Anspritzpunkt (110) in der Längsrichtung (L) des Kunststoffbehältnisses (100) in Richtung der Mündung (108) des Kunststoffbehältnisses (100) ragt und sich an die erste gewölbte Struktur (130) in der radialen Richtung nach außen eine zweite gewölbte Struktur (140) anschließt, wobei diese zweite gewölbte Struktur in Richtung der Mündung (102) des Kunststoffbehältnisses (100) gewölbt ist, wobei ein Krümmungsradius der ersten gewölbten Struktur (130) wenigstens abschnittsweise geringer ist als ein Krümmungsradius der zweiten gewölbten Struktur (140) und wobei wenigstens ein Zugband (150) einen ersten Abschnitt (150a) und einen zweiten Abschnitt (150b) aufweist, die sich bevorzugt jeweils in der radialen Richtung erstrecken und die besonders bevorzugt voneinander beabstandet sind.

2. Kunststoffbehältnis (1) nach Anspruch 1,
**dadurch gekennzeichnet, dass**
ein Gewichtsanteil des Bodenabschnitts (102) an dem Gesamtgewicht des Kunststoffbehältnisses (1) größer ist als 10 %, bevorzugt größer als 15 %, bevorzugt größer als 20 % und/oder ein Gewichtsanteil des Bodenabschnitts (102) an einem Gesamtgewicht des Kunststoffbehältnisses kleiner ist als 50 %, bevorzugt kleiner als 40 %, bevorzugt kleiner als 35 %.

3. Kunststoffbehältnis (1) nach wenigstens einem der vorangegangenen Ansprüche,
**dadurch gekennzeichnet, dass**
ein Gesamtgewicht des Bodenabschnitts (102) größer ist als 3g, bevorzugt größer als 5g, bevorzugt größer als 7g.

4. Kunststoffbehältnis (1) nach wenigstens einem der vorangegangenen Ansprüche,
**dadurch gekennzeichnet, dass**
eine Höhe (11) der ersten gewölbten Struktur (130) zu der Höhe (14) des Bodenabschnitts in einem Verhältnis steht, welches zwischen 0,25 und 0,80 liegt und/oder die Höhe (10) der zweiten domartigen Struktur (4) zu der Höhe des Bodenabschnitts in einem Verhältnis steht, welches unter 0,5 liegt.

5. Kunststoffbehältnis (1) nach wenigstens einem der vorangegangenen Ansprüche,
**dadurch gekennzeichnet, dass**
der Bodenabschnitt über durch einen Spline beschreibbaren Abschnitt (6) in den Grundkörper (106) übergeht, wobei bevorzugt ein Krümmungsverlauf dieses Splines durch ein Polynom n-ten Grades beschreibbar ist und der Grad besonders bevorzugt zwischen 2 und 7 liegt.

6. Kunststoffbehältnis (1) nach wenigstens einem der vorangegangenen Ansprüche,
**dadurch gekennzeichnet, dass**
die zweite gewölbte Struktur gegenüber der Längsrichtung unter einem Winkel verläuft, der größer ist als 20°, bevorzugt größer als 30°, bevorzugt größer als 40°, bevorzugt größer als 50° und/oder dass der kegelstumpfförmige Abschnitt gegenüber der Längsrichtung unter einem Winkel verläuft, der kleiner ist als 80°, bevorzugt kleiner als 70°.

7. Kunststoffbehältnis (1) nach wenigstens einem der vorangegangenen Ansprüche,
**dadurch gekennzeichnet, dass**
alle Standfußbereiche (115) gleichartig ausgebildet sind.

8. Kunststoffbehältnis (1) nach wenigstens einem der vorangegangenen Ansprüche,
**dadurch gekennzeichnet, dass**
wenigstens ein Standfußbereich und bevorzugt mehrere Standfußbereiche und bevorzugt alle Standfußbereiche von dem Zentralbereich und/oder der ersten gewölbten Struktur in der radialen Richtung beabstandet sind.

9. Kunststoffbehältnis (1) nach wenigstens einem der vorangegangenen Ansprüche,
**dadurch gekennzeichnet, dass**
ein Verhältnis zwischen einem Standkreisdurchmesser und einem Außendurchmesser des Behältnisses zwischen 0,615 und 0,835 und bevorzugt zwischen 0,63 und 0,77 und besonders bevorzugt zwischen 0,65 und 0,75 liegt.

10. Kunststoffbehältnis (1) nach wenigstens einem der vorangegangenen Ansprüche,
**dadurch gekennzeichnet, dass**
wenigstens ein Zugband und bevorzugt mehrere Zugbänder und besonders bevorzugt alle Zugbänder wenigstens abschnittsweise und bevorzugt vollständig geradlinig verlaufen.

11. Kunststoffbehältnis (1) nach wenigstens einem der vorangegangenen Ansprüche,
**dadurch gekennzeichnet, dass**
das Zugband einen Querschnitt aufweist, welcher aus einer Gruppe von Querschnitten ausgewählt ist, welche trapezförmige Querschnitte, kreissegmentförmige Querschnitte, elliptische Querschnitte, dreieckförmige Querschnitte, rechteckförmige Querschnitte und dergleichen enthält.

12. Kunststoffbehältnis (1) nach wenigstens einem der vorangegangenen Ansprüche,
**dadurch gekennzeichnet, dass**
der Bodenabschnitt wenigstens einen und bevorzugt eine Vielzahl von in der Umfangsrichtung des Bodenabschnitts (2) umlaufende Nuten aufweist.

13. Verfahren zur Herstellung eines Kunststoffbehältnisses (100) nach wenigstens einem der vorangegangenen Ansprüche, wobei zunächst Kunststoffvorformlinge zur Verfügung gestellt werden und diese Kunststoffvorformlinge erwärmt werden und die Kunststoffvorformlinge innerhalb einer Blasform expandiert werden, wobei ein Bodenteil dieser Blasform derart gestaltet ist, dass es einen Bodenabschnitt eines Kunststoffbehältnisses (100) nach wenigstens einem der vorangegangenen Ansprüche erzeugt,
**dadurch gekennzeichnet, dass**
die Kunststoffvorformlinge zu ihrer Expansion mit einem gasförmigen Medium mit wenigstens zwei unterschiedlichen Druckstufen beaufschlagt werden, wobei eine dieser Druckstufen einen Fertigblasdruck aufweist und dieser Fertigblasdruck unter 30 bar, bevorzugt unter 25 bar und besonders bevorzugt unter 20 bar liegt.

14. Verwendung eines Kunststoffbehältnisses nach wenigstens einem der vorangegangenen Ansprüche für druckbeaufschlagte Produkte.

15. Blasform zum Herstellen eines Kunststoffbehältnisses nach wenigstens einem der vorangegangenen Ansprüche,
**dadurch gekennzeichnet, dass**
diese Blasform ein Bodenteil aufweist, welches zur Erzeugung eines Bodenabschnitts für ein Kunststoffbehältnis nach wenigstens einem der vorangegangenen Ansprüche geeignet und bestimmt ist.
